(19) **Europäisches Patentamt / European Patent Office / Office européen des brevets**

(11) **EP 1 713 173 B1**

(12) **FASCICULE DE BREVET EUROPEEN**

(45) Date de publication et mention de la délivrance du brevet:
**23.09.2015   Bulletin 2015/39**

(51) Int Cl.:
***H02P 21/14*** *(2006.01)*

(21) Numéro de dépôt: **06111576.2**

(22) Date de dépôt: **23.03.2006**

(54) **Procédé d'ajustement de paramètres d'un moteur électrique et variateur de vitesse utilisant un tel procédé**

Verfahren zur Justierung der Parameter eines Elektromotors und Verwendung eines solchen Verfahrens in einer Drehzahlregelung

Method for adjusting parameters of an electric motor and variable speed drive using such a method

(84) Etats contractants désignés:
**AT BE BG CH CY CZ DE DK EE ES FI FR GB GR HU IE IS IT LI LT LU LV MC NL PL PT RO SE SI SK TR**

(30) Priorité:  **13.04.2005   FR 0550944**

(43) Date de publication de la demande:
**18.10.2006   Bulletin 2006/42**

(73) Titulaire: **Schneider Toshiba Inverter Europe SAS 27120 Pacy sur Eure (FR)**

(72) Inventeurs:
• **Jadot, Fabrice**
  **27120, PACY SUR EURE (FR)**
• **Malrait, François**
  **27120, JOUY SUR EURE (FR)**
• **Sepulchre, Rodolphe**
  **4122, Neupré (BE)**

(74) Mandataire: **Dufresne, Thierry et al Schneider Electric Industries SAS Service Propriété Industrielle 35 rue Joseph Monier - CS 30323 92506 Rueil-Malmaison Cedex (FR)**

(56) Documents cités:
EP-A- 0 899 864    US-A- 4 670 698
US-A- 5 278 485    US-A1- 2003 155 885

**Description**

La présente invention se rapporte à un procédé d'ajustement de paramètres moteur dans un variateur de vitesse électronique, de type convertisseur de fréquence, destiné au contrôle et à la commande d'un moteur électrique à induction. L'invention concerne également un variateur de vitesse mettant en oeuvre un tel procédé.

Un variateur de vitesse électronique de type convertisseur de fréquence est chargé de commander un moteur à induction, c'est-à-dire un moteur ayant les propriétés de Blondel-Park tel qu'un moteur asynchrone triphasé. Le variateur est alimenté par un réseau électrique alternatif à fréquence fixe et délivre au moteur une alimentation en courant alternatif dont la tension et la fréquence sont variables, en fonction des consignes de vitesse et des exigences de l'application. Pour cela, un variateur de vitesse comporte une unité de traitement capable de piloter une électronique de commande en faisant appel au contrôle vectoriel de flux.

Pour obtenir de bonnes performances du moteur, la commande du variateur de vitesse doit être basée sur une représentation fiable d'un modèle électrique du moteur utilisant un ensemble de paramètres physiques. Il faut donc connaître un certain nombre de données représentatives des caractéristiques du moteur pour établir ce modèle.

Certaines de ces données moteur sont fournies par le constructeur du moteur électrique à commander. Ces données sont appelées données de base ou parfois "données plaque" car elles sont habituellement inscrites sur une plaque de signalisation fixée au moteur. Elles peuvent être également fournies dans la documentation du moteur.

Cependant, toutes les données nécessaires à l'élaboration du modèle du moteur ne sont pas fournies avec le moteur et il est donc nécessaire d'estimer certains paramètres manquants, par calcul ou par mesure à l'aide de différentes méthodes envisageables, pour obtenir un modèle fiable du moteur. Ces méthodes utilisent par exemple une phase préalable d'identification ou d'auto-apprentissage du moteur ou mémorisent dans le variateur des séries de valeurs estimées correspondant aux paramètres à estimer à l'aide de tableaux de données ou calculent certains paramètres au moyen d'équations empiriques.

Néanmoins, certains paramètres moteur peuvent évoluer dans le temps durant le fonctionnement du moteur, en particulier la résistance rotorique $R_R$ qui fluctue beaucoup avec la température du moteur. Si, à un instant donné, il existe une erreur dans l'estimation de la valeur de cette résistance rotorique, alors le courant électrique fourni au moteur par le variateur peut être plus important que nécessaire au point de fonctionnement nominal du moteur. De même, l'inductance rotorique $L_R$ du moteur peut varier lors d'une modification du flux (par exemple en cas de fonctionnement en zone de défluxage). Or, la précision du couple fourni par le moteur dépend de la précision de la valeur de l'inductance rotorique.

Le document EP 0 899 864 décrit une commande de moteur à induction. La résistance rotonique est estimée à partir de l'intégrale de la différence entre courant de flux moteur estimé et une mesure de courant de flux moteur.

On peut ainsi dégrader les performances de l'ensemble variateur + moteur en entraînant des problèmes de consommation, surchauffe ou en générant des oscillations de courant, de vitesse et de couple. Il serait donc appréciable de pouvoir ajuster, en cours de fonctionnement, les paramètres préalablement estimés de façon à optimiser la commande du moteur.

C'est pourquoi l'invention a pour but, lorsqu'une mesure de la vitesse moteur existe dans le variateur (fonctionnement en boucle fermée), de corriger en temps réel les valeurs de la résistance rotorique $R_R$ et de l'inductance rotorique $L_R$ du moteur en utilisant le terme intégral de la boucle de courant, permettant ainsi d'ajuster les valeurs des paramètres du modèle moteur.

Pour cela, l'invention décrit un procédé d'ajustement de paramètres moteur dans un variateur de vitesse destiné à la commande d'un moteur électrique à induction. Le procédé comprend une étape de détermination d'un premier écart entre une référence du courant de couple moteur et une mesure du courant de couple moteur, et d'un second écart entre une référence du courant de flux moteur et une mesure du courant de flux moteur, une étape de calcul d'une valeur de correction de la résistance rotorique du moteur et d'une valeur de correction de l'inductance rotorique du moteur à partir du terme intégral dudit premier écart et à partir du terme intégral dudit second écart, une étape d'ajustement des valeurs des paramètres du modèle moteur à partir desdites valeurs de correction de l'inductance rotorique et de la résistance rotorique et une étape d'élaboration des tensions de commande à appliquer au moteur en utilisant lesdites valeurs ajustées des paramètres moteur.

Selon une caractéristique, la référence du courant de couple est obtenue à partir d'une référence de la vitesse moteur et d'une mesure de la vitesse du moteur.

Selon une autre caractéristique, le procédé est mis en oeuvre dans le variateur lorsque la mesure de vitesse moteur dépasse une valeur de seuil prédéterminée.

D'autres caractéristiques et avantages vont apparaître dans la description détaillée qui suit en se référant à un mode de réalisation donné à titre d'exemple et représenté par les dessins annexés sur lesquels :

- la figure 1 représente un schéma simplifié de la commande d'un moteur à induction selon l'invention,
- la figure 2 détaille le bloc régulateur de courant 15 de la figure 1.

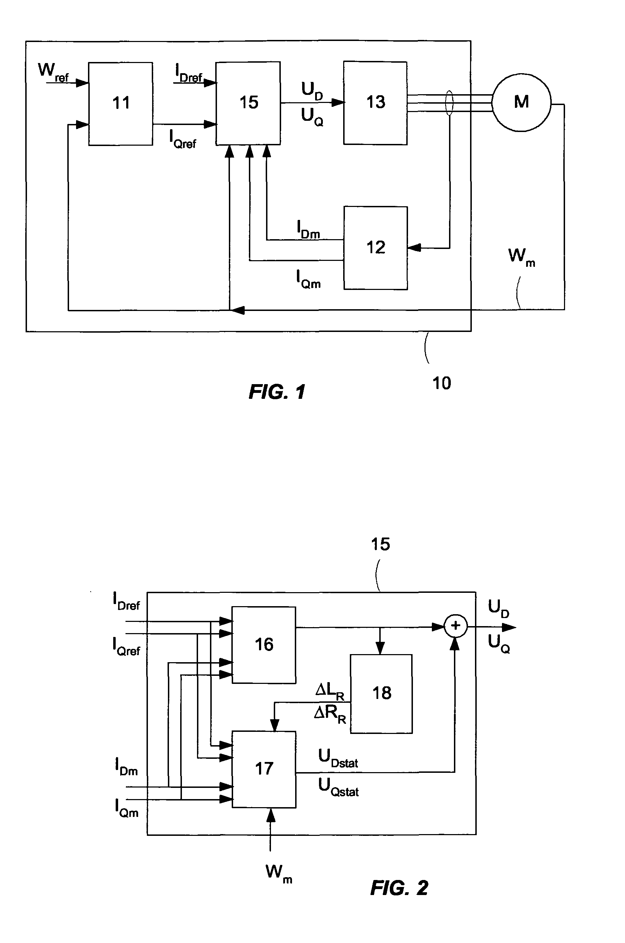

En référence à la figure 1, un variateur de vitesse, de type convertisseur de fréquence, est chargé de commander et contrôler un moteur électrique asynchrone triphasé M, grâce à une unité de traitement 10 capable notamment de piloter une électronique de commande (non représentée sur la figure 1) en utilisant un contrôle vectoriel de flux. Un capteur de vitesse permet de fournir au variateur un retour de la vitesse réelle du moteur $W_m$.

L'unité de traitement 10 du variateur de vitesse comprend un bloc régulateur de vitesse 11 qui reçoit en entrée une référence de la vitesse moteur $W_{ref}$ et la mesure de vitesse moteur $W_m$, de manière à délivrer en sortie une référence du courant de couple moteur $I_{Qref}$. Cette référence du courant de couple moteur $I_{Qref}$ est déterminée avec précision puisqu'elle s'appuie sur une valeur réelle mesurée $W_m$ de la vitesse moteur.

L'unité de traitement 10 du variateur de vitesse comprend ensuite un bloc régulateur de courant 15 qui reçoit en entrée une référence du courant de flux moteur $I_{Dref}$ et la référence du courant de couple moteur $I_{Qref}$ issue du bloc 11. Le bloc 15 reçoit également les valeurs mesurées des courants de couple et de flux moteur, respectivement $I_{Qm}$, $I_{Dm}$, ainsi que la mesure de vitesse moteur $W_m$. Les valeurs $I_{Qm}$, $I_{Dm}$ peuvent provenir d'un bloc convertisseur 12 qui transforme de façon connue des mesures issues de capteurs de tension et de courant sur les conducteurs d'alimentation du moteur (c'est-à-dire conversion par rotation des tensions des trois phases du moteur en coordonnées d, q).

Le bloc régulateur de courant 15 fournit en sortie des tensions de commande de flux $U_D$ et de commande de couple $U_Q$ à un bloc convertisseur 13 qui les transforment de manière classique en consignes de tension vers une électronique de commande alimentant les différentes phases du moteur M.

Selon l'invention, le bloc régulateur de courant 15 comprend un bloc intégrateur 16 qui calcule le terme intégral d'un premier écart $\Delta I_Q$ existant entre la référence du courant de couple moteur $I_{Qref}$ et la mesure du courant de couple moteur $I_{Qm}$, et le terme intégral d'un second écart $\Delta I_D$ existant entre la référence du courant de flux moteur $I_{Dref}$ et la mesure du courant de flux moteur $I_{Dm}$.

Au point de fonctionnement d'équilibre du moteur, en négligeant les variations de la résistance statorique $R_S$ et de l'inductance de fuite $L_F$, nous avons la relation suivante écrite sous forme vectorielle :

$$\begin{pmatrix} \int (I_{Dref} - I_{Dm}) \\ \int (I_{Qref} - I_{Qm}) \end{pmatrix} = \begin{pmatrix} \int \Delta I_D \\ \int \Delta I_Q \end{pmatrix} = K \begin{pmatrix} \Delta L_R \\ \Delta R_R \end{pmatrix}$$

dans laquelle $\Delta L_R$ $\Delta R_R$ représentent les valeurs relatives de correction respectivement de l'inductance rotorique et de la résistance rotorique et dans laquelle le coefficient K peut s'exprimer comme une matrice de rotation dépendant de $T_R$ et de $W_G$, avec :

■ $W_G$ représentant la vitesse de glissement connue par $W_G = W_S - W_m$, où $W_S$ est la fréquence du réseau d'alimentation électrique et $W_m$ est la mesure de la vitesse du moteur,

■ $T_R$ représentant l'image de la constante de temps du moteur $T_R = R_R / L_R$.

On obtient ainsi la relation suivante :

$$\begin{pmatrix} \int \Delta I_D \\ \int \Delta I_Q \end{pmatrix} = \frac{W_S}{k_l(T_R{}^2 + W_G{}^2)} \begin{pmatrix} W_G T_R{}^1 & -W_G T_R{}^1 \\ T_R{}^2 & W_G{}^2 \end{pmatrix} \begin{pmatrix} \Delta L_R \\ \Delta R_R \end{pmatrix}$$

Ainsi, en régime stable de fonctionnement du moteur, le calcul des termes intégraux des écarts de courant $\Delta I_D$ et $\Delta I_Q$ permettent de déterminer en temps réel des valeurs de correction $\Delta L_R$ et $\Delta R_R$ à appliquer à l'inductance rotorique et à la résistance rotorique du moteur de façon à pouvoir d'affiner en permanence le modèle moteur avec des valeurs réelles de l'inductance rotorique et de la résistance rotorique.

Le bloc régulateur de courant 15 comprend donc un bloc adaptateur de paramètres 18 qui reçoit en entrée les termes intégraux de $\triangle I_D$ et de $\triangle I_Q$ de façon à calculer $\Delta L_R$ et $\Delta R_R$ pour obtenir des valeurs corrigées de l'inductance rotorique $L_R$ et de la résistance rotorique $R_R$ du moteur, ainsi que des autres paramètres moteur qui dépendent de $L_R$ et $R_R$, comme par exemple $T_R$. Grâce à l'invention, tant que les termes intégraux de $\Delta I_D$ et de $\Delta I_Q$ ne seront pas nuls, les paramètres $L_R$ et $R_R$ seront ajustés permettant ainsi d'améliorer en continu les paramètres du modèle moteur. Une fois que les valeurs exactes de $L_R$ et $R_R$ seront atteintes, les termes intégraux de $\Delta I_D$ et de $\Delta I_Q$ convergeront alors vers zéro.

Les nouveaux paramètres corrigés sont ensuite introduits dans un bloc compensation 17 (appelé aussi feed-forward) qui calcule les parties statiques (offset) de la tension de commande de flux $U_{Dstat}$ et de la tension de commande de couple $U_{Qstat}$, grâce aux relations suivantes :

$$U_{Dstat} = (R_R + R_S) * I_{Dref} - L_F * W_S * I_{Qref} - R_R / L_R * \Phi_{ref}$$

$$U_{Qstat} = (R_R + R_S) * I_{Qref} + L_F * W_S * I_{Dref} - W_m * \Phi_{ref}$$

dans lesquelles $\Phi_{ref}$ représente le flux de référence ou flux nominal du moteur = $U_N / W_N$.

Les parties statiques des tensions $U_{Dstat}$, $U_{Qstat}$ issues du bloc compensation 17 sont ensuite additionnées avec les termes proportionnels et intégraux de respectivement $\Delta I_D$, $\Delta I_Q$ issus de la sortie du bloc intégrateur 16, pour fournir en sortie du bloc régulateur de courant 15 les consignes des tensions de commande de flux $U_D$ et de commande de couple $U_Q$ à appliquer au moteur, selon les relations :

$$U_D = U_{Dstat} + K_P * \Delta I_D + K_I * \int \Delta I_D$$

$$U_Q = U_{Qstat} + K_P * \Delta I_Q + K_I * \int \Delta I_Q$$

dans lesquelles $K_P$ et $K_I$ représentent respectivement le gain proportionnel et le gain intégral de la régulation de courant.

Préférentiellement, la correction des paramètres $L_R$ et $R_R$ est mise en oeuvre à l'aide du procédé décrit dans la présente invention seulement lorsque la mesure de vitesse moteur ($W_m$) dépasse une valeur de seuil prédéterminée, par exemple égale à 5 Hz. En effet, en dessous de cette valeur de seuil, la résistance statorique $R_S$ du moteur devient prépondérante par rapport aux autres paramètres et une erreur relative peut perturber le bon fonctionnement du procédé décrit.

Le procédé d'ajustement comprend donc les étapes suivantes :

- une étape de détermination du terme intégral du premier écart $\Delta I_Q$, et du terme intégral du second écart $\Delta I_D$, réalisée dans le bloc intégrateur 16,
- une étape de calcul de la valeur de correction $\Delta R_R$ et de la valeur de correction $\Delta L_R$ à partir du terme intégral du premier écart $\Delta I_Q$ et à partir du terme intégral du second écart $\Delta I_D$,
- une étape d'ajustement des valeurs des paramètres $L_R$ et $R_R$ du modèle moteur à partir des valeurs de correction $\Delta L_R$ et $\Delta R_R$, ces deux étapes étant réalisées dans le bloc adaptateur 18,
- une étape d'élaboration en sortie du bloc régulateur 15 de la tension de commande de flux $U_D$ et de la tension de commande de couple $U_Q$ appliquées au moteur M, en utilisant les valeurs ajustées des paramètres moteur. Cette étape d'élaboration de $U_D$ et $U_Q$ comprend une étape de calcul des parties statiques $U_{Dstat}$ et $U_{Qstat}$ dans le bloc compensation 17 et une étape d'addition de $U_{Dstat}$ et $U_{Qstat}$ avec les termes proportionnels et intégraux de $\Delta I_D$ et $\Delta I_Q$ pour fournir $U_D$ et $U_Q$.

Il est bien entendu que l'on peut, sans sortir du cadre de l'invention tel que défini par les revendications, imaginer d'autres variantes et perfectionnements de détail.

**Revendications**

1. Procédé d'ajustement de paramètres moteur dans un variateur de vitesse destiné à la commande d'un moteur électrique à induction (M), le procédé étant **caractérisé en ce qu'**il comprend :

 - une étape de détermination d'un premier écart ($\Delta I_Q$) entre une référence du courant de couple moteur ($I_{Qref}$) et une mesure du courant de couple moteur ($I_{Qm}$), et d'un second écart ($\Delta I_D$) entre une référence du courant de flux moteur ($I_{Dref}$) et une mesure du courant de flux moteur ($I_{Dm}$),
 - une étape de calcul d'une valeur de correction ($\Delta R_R$) de la résistance rotorique du moteur et d'une valeur de correction ($\Delta L_R$) de l'inductance rotorique du moteur à partir du terme intégral dudit premier écart ($\Delta I_Q$) et du terme intégral dudit second écart ($\Delta I_D$),
 - une étape d'ajustement des valeurs des paramètres du modèle moteur à partir desdites valeurs de correction ($\Delta L_R$, $\Delta R_R$) de l'inductance rotorique et de la résistance rotorique,
 - une étape d'élaboration des tensions de commande ($U_D$, $U_Q$) à appliquer au moteur (M) en utilisant lesdites valeurs ajustées des paramètres moteur.

**2.** Procédé selon la revendication 1, **caractérisé en ce que** la référence du courant de couple ($I_{Qref}$) est obtenue à partir d'une référence de la vitesse moteur ($W_{ref}$) et d'une mesure de la vitesse du moteur ($W_m$).

**3.** Procédé selon la revendication 2, **caractérisé en ce qu'**il est mis en oeuvre dans le variateur lorsque la mesure de vitesse moteur ($W_m$) dépasse une valeur de seuil prédéterminée.

**4.** Variateur de vitesse destiné à la commande d'un moteur électrique à induction (M), doté d'une unité de traitement (10) comprenant un bloc régulateur de courant (15) fournissant des tensions de commande du moteur (M), **caractérisé en ce que** le bloc régulateur de courant (15) comporte :

- Un bloc intégrateur (16) pour déterminer un premier écart ($\Delta I_Q$) entre une référence du courant de couple moteur ($I_{Qref}$) et une mesure du courant de couple moteur ($I_{Qm}$), et un second écart ($\Delta I_D$) entre une référence du courant de flux moteur ($I_{Dref}$) et une mesure du courant de flux moteur ($I_{Dm}$),
- Un bloc adaptateur (18) calculant une valeur de correction ($\Delta R_R$) de la résistance rotorique du moteur et une valeur de correction ($\Delta L_R$) de l'inductance rotorique du moteur à partir du terme intégral dudit premier écart ($\Delta I_Q$) et du terme intégral dudit second écart ($\Delta I_D$), et ajustant des valeurs des paramètres du modèle moteur à partir desdites valeurs de correction ($\Delta L_R$, $\Delta R_R$) de l'inductance rotorique et de la résistance rotorique,
- Un bloc compensation (17) utilisant lesdites valeurs ajustées des paramètres moteur pour élaborer des tensions de commande ($U_D$, $U_Q$) à appliquer au moteur (M).

**5.** Variateur de vitesse selon la revendication 4, **caractérisé en ce que** l'unité de traitement (10) comporte un bloc régulateur de vitesse (11) calculant la référence du courant de couple ($I_{Qref}$) à partir d'une référence de la vitesse moteur ($W_{ref}$) et d'une mesure de la vitesse du moteur ($W_m$).

**6.** Variateur de vitesse selon la revendication 5, **caractérisé en ce que** le calcul de la valeur de correction ($\Delta R_R$) de la résistance rotorique et de la valeur de correction ($\Delta L_R$) de l'inductance rotorique est mis en oeuvre dans le bloc adaptateur (18) lorsque la mesure de vitesse moteur ($W_m$) dépasse une valeur de seuil prédéterminée.

**Patentansprüche**

**1.** Verfahren zum Justieren von Motorparametern in einem Umrichter, der zum Steuern eines Induktionselektromotors (M) bestimmt ist, Verfahren **dadurch gekennzeichnet, dass** es Folgendes umfasst:

- einen Bestimmungsschritt eines ersten Unterschieds ($\Delta I_Q$) zwischen einer Referenz des Motordrehmomentstroms ($I_{Qref}$) und einer Messung des Motordrehmomentstroms ($I_{Qm}$), und eines zweiten Unterschieds ($\Delta I_D$) zwischen einer Referenz des Motorflussstroms ($I_{Dref}$) und einer Messung des Motorflussstroms ($I_{Dm}$),
- einen Berechnungsschritt eines Korrekturwerts ($\Delta R_R$) des Rotorwiderstands des Motors und eines Korrekturwerts ($\Delta L_R$) der Rotorinduktanz des Motors ausgehend von dem Integralglied des ersten Unterschieds ($\Delta I_Q$) und von dem Integralglied des zweiten Unterschieds ($\Delta I_D$),
- einen Justierschritt der Parameterwerte des Motormodells ausgehend von den Korrekturwerten ($\Delta L_R$, $\Delta R_R$) der Rotorinduktanz und des Rotorwiderstands,
- einen Erstellungsschritt der Steuerspannungen ($U_D$, $U_Q$), die an den Motor (M) anzulegen sind, indem die justierten Werte der Motorparameter verwendet werden.

**2.** Verfahren nach Anspruch 1, **dadurch gekennzeichnet, dass** die Referenz des Drehmomentstroms ($I_{Qref}$) ausgehend von einer Referenz der Motordrehzahl ($W_{ref}$) und einer Messung der Motordrehzahl ($W_m$) erhalten wird.

**3.** Verfahren nach Anspruch 2, **dadurch gekennzeichnet, dass** es in dem Umrichter umgesetzt wird, wenn die Motordrehzahlmessung ($W_m$) einen vorbestimmten Schwellenwert überschreitet.

**4.** Umrichter, der zum Steuern eines Induktionselektromotors (M) bestimmt ist, der mit einer Verarbeitungseinheit (10) versehen ist, die einen Stromregelblock (15) umfasst, der Steuerspannungen des Motors (M) liefert, **dadurch gekennzeichnet, dass** der Stromregelblock (15) Folgendes umfasst:

- einen Integratorblock (16), um einen ersten Unterschied ($\Delta I_Q$) zwischen einer Referenz des Motordrehmomentstroms ($I_{Qref}$) und einer Messung des Motordrehmomentstroms ($I_{Qm}$) zu bestimmen, und einen zweiten Unterschied ($\Delta I_D$) zwischen einer Referenz des Motorflussstroms ($I_{Dref}$) und einer Messung des Motorflussstroms ($I_{Dm}$),
- einen Adapterblock (18), der einen Korrekturwert ($\Delta R_R$) des Rotorwiderstands des Motors und einen Korrekturwert ($\Delta L_R$) der Rotorinduktanz des Motors ausgehend von dem Integralglied des ersten Unterschieds ($\Delta I_Q$) und dem Integralglied des zweiten Unterschieds ($\Delta I_D$) berechnet und Parameterwerte des Motormodells ausgehend von den Korrekturwerten ($\Delta L_R$, $\Delta R_R$) der Rotorinduktanz und des Rotorwiderstands justiert,
- einen Kompensationsblock (17), der die justierten Werte der Motorparameter verwendet, um Steuerspannungen ($U_D$, $U_Q$) zu erstellen, die an den Motor (M) anzulegen sind.

5. Umrichter nach Anspruch 4, **dadurch gekennzeichnet, dass** die Verarbeitungseinheit (10) einen Drehzahlregelblock (11) umfasst, der die Referenz des Drehmomentstroms ($I_{Qref}$) ausgehend von einer Referenz der Motordrehzahl ($W_{ref}$) und einer Messung der Motordrehzahl ($W_m$) berechnet.

6. Umrichter nach Anspruch 5, **dadurch gekennzeichnet, dass** die Berechnung des Korrekturwerts ($\Delta R_R$) des Rotorwiderstands und des Korrekturwerts ($\Delta L_R$) der Rotorinduktanz in dem Adapterblock (18) umgesetzt wird, wenn die Messung der Motordrehzahl ($W_m$) einen vorbestimmten Schwellenwert überschreitet.

**Claims**

1. Method for adjusting motor parameters in a variable speed drive intended to control an electric induction motor (M), wherein the method comprises :

   - a step for determining a first difference ($\Delta I_Q$) between a motor torque current reference ($I_{Qref}$) and a motor torque current measurement ($I_{Qm}$), and a second difference ($\Delta I_D$) between a motor flux current reference ($I_{Dref}$) and a motor flux current measurement ($I_{Dm}$),
   - a step for calculating a correction value ($\Delta R_R$) of the motor's rotor resistance and a correction value ($\Delta L_R$) of the motor's rotor inductance from the integral term of said first difference ($\Delta I_Q$) and from the integral term of said second difference ($\Delta I_D$),
   - a step for adjusting values of parameters of the motor model based on said correction values ($\Delta L_R$, $\Delta R_R$) of the rotor inductance and the rotor resistance,
   - a step for generating control voltages ($U_D$, $U_Q$) to be applied to the motor (M), using said adjusted motor parameter values.

2. Method according to Claim 1, wherein the torque current reference ($I_{Qref}$) is obtained from a motor speed reference ($W_{ref}$) and from a motor speed measurement ($W_m$).

3. Method according to Claim 2, wherein the method is executed in the variable speed drive when the motor speed measurement ($W_m$) exceeds a predetermined threshold value.

4. Variable speed drive intended to control an electric induction motor (M), equipped with a processing unit (10) including a current regulator block (15) delivering control voltages of the motor (M), wherein the current regulator block (15) comprises :

   - an integrator block (16) to determine a first difference ($\Delta I_Q$) between a motor torque current reference ($I_{Qref}$) and a motor torque current measurement ($I_{Qm}$), and a second difference ($\Delta I_D$) between a motor flux current reference ($I_{Dref}$) and a motor flux current measurement ($I_{Dm}$),
   - an adaptor block (18) calculating a correction value ($\Delta R_R$) of the motor's rotor resistance and a correction value ($\Delta L_R$) of the motor's rotor inductance from the integral term of said first difference ($\Delta I_Q$) and from the integral term of said second difference ($\Delta I_D$), and adjusting values of parameters of the motor model based on said correction values ($\Delta L_R$, $\Delta R_R$) of the rotor inductance and the rotor resistance,
   - a compensation block (17) using said adjusted motor parameter values to generate control voltages ($U_D$, $U_Q$) to be applied to the motor (M).

5. Variable speed drive according to Claim 4, wherein the processing unit (10) includes a speed regulator block (11) calculating the torque current reference ($I_{Qref}$) from a motor speed reference ($W_{ref}$) and from a motor speed measurement ($W_m$).

6. Variable speed drive according to Claim 5, wherein the calculation of the rotor resistance correction value ($\Delta R_R$)

and of the rotor inductance correction value ($\Delta L_R$) is implemented in the adaptor block (18) when the motor speed measurement ($W_m$) exceeds a predetermined threshold value.

**FIG. 1**

10

**FIG. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0899864 A